# EUROPÄISCHE PATENTSCHRIFT

(11) **EP 2 792 007 B1**
(45) Veröffentlichungstag und Bekanntmachung des Hinweises auf die Patenterteilung: **30.05.2018**
(21) Anmeldenummer: 12788508.5
(22) Anmeldetag: 16.11.2012
(51) Int. Cl.: H01M 6/18, H01M 8/12, H01M 8/24, C03C 3/062, C03C 3/21, C03C 10/00, C03B 19/06, C04B 35/447, C03B 32/02, C04B 38/00, H01M 10/052, H01M 10/0562, H01M 10/36, H01M 12/08

(54) **FESTKÖRPERELEKTROLYT FÜR DEN EINSATZ IN LITHIUM-LUFT- ODER LITHIUM-WASSER-AKKUMULATOREN**
SOLID STATE ELECTROLYTE FOR USE IN LITHIUM-AIR OR LITHIUM-WATER STORAGE BATTERIES
ÉLECTROLYTE SOLIDE DESTINÉ À ÊTRE UTILISÉ DANS DES ACCUMULATEURS LITHIUM-AIR OU LITHIUM-EAU

(30) Priorität: 12.12.2011 DE 102011121236
(43) Veröffentlichungstag der Anmeldung: 22.10.2014
(73) Patentinhaber: Fraunhofer Gesellschaft zur Förderung der angewandten Forschung e.V., 80636 München (DE)
(72) Erfinder: SCHILM, Jochen, 01445 Radebeul (DE); ROST, Axel, 01239 Dresden (DE); KUSNEZOFF, Mihails, 01309 Dresden (DE)
(74) Vertreter: Pfenning, Meinig & Partner mbB
(86) Internationale Anmeldenummer: PCT/EP2012/072876
(87) Internationale Veröffentlichungsnummer: WO 2013/087355

(56) Entgegenhaltungen:
- EP-A1- 0 499 935
- WO-A1-00/59845
- WO-A2-2009/070600
- JP-A- 2 225 310
- JP-A- 63 166 160
- US-A1- 2007 231 704
- US-A1- 2009 317 724
- US-A1- 2011 262 836
- KUMAR B ET AL: "Space Charge Signature and Its Effects on Ionic Transport in Heterogenous Solids", JOURNAL OF THE AMERICA CERAMIC SOCIETY,, Bd. 90, Nr. 10, 1. Oktober 2007 (2007-10-01), Seiten 3323-3325, XP002551329, DOI: 10.1111/J.1551-2916.2007.01877.X [gefunden am 2007-07-31]
- KUMAR B ET AL: "Ionic conduction through heterogeneous solids: Delineation of the blocking and space charge effects", JOURNAL OF POWER SOURCES, ELSEVIER SA, CH, Bd. 160, Nr. 2, 6. Oktober 2006 (2006-10-06), Seiten 1329-1335, XP027938185, ISSN: 0378-7753 [gefunden am 2006-10-06]

## Beschreibung

Die Erfindung betrifft Lithium-Luft- oder Lithium-Wasser-Akkumulator mit einem Festkörperelektroyt. Für sekundäre und primäre Lithium-Ionen Batterien muss in Verbindung mit Sauerstoffreduktionskathoden eine gasdichte und gleichzeitig ionenleitende Trennung (Elektrolytfunktion) der aus reinem Lithium bestehenden Anode sowie der O₂-haltigen Kathode realisiert werden. Die Kathoden von Lithium-Luft-Batterien sind mit Luft gebildet, da Luft als reduktives Medium wirken kann. Das Produkt der Reaktion (Li₂O₂) kann sich an einer auf Carbon-Phasen basierenden Gasdiffusionsschicht ablagern.

Im Fall von Lithium-Wasser-Batterien dient Wasser offenbar selbst als Kathode.

Aus diesen Randbedingungen ergibt sich ein Eigenschaftsprofil für geeignete Festkörperelektrolyte mit folgenden Anforderungen:
1. Der Festkörperelektrolyt sollte bei Raumtemperatur bzw. im relevanten Temperaturbereich für den Betrieb eines solchen Akkumulators eine ausreichend hohe spezifische Ionenleitfähigkeit von mindestens 1.10⁻⁴ S cm⁻¹ erreichen.
2. Der Elektrolyt muss gasdicht sein, um eine Diffusion von Sauerstoff in den Anodenbereich zu vermeiden.
3. Es muss eine gute Stabilität gegenüber wässrigen Medien gegeben sein, damit Korrosionsreaktionen vermieden werden.

Als Stand der Technik werden hierfür dichte Lithium-Ionen leitende Glaskeramiken in Form von monolithischen, planaren und dichten Substraten angeboten. Die Herstellung ist beispielsweise in US 2007/0231704 A1 beschrieben und kann als aufwendig und kostenintensiv, nicht zuletzt aufgrund eines hohen Bedarfs an teuren Rohstoffen, bezeichnet werden. Zudem muss das verwendete glaskeramische Material eine sehr hohe spezifische Leitfähigkeit aufweisen, da es eine ausreichende Dicke (Migrationsweg der Li⁺-Ionen) aufweisen muss, um die mechanische Stabilität des Substrates zu gewährleisten. Im Falle zu geringer spezifischer Ionen-Leitfähigkeiten des glaskeramischen Materials würde der Widerstand des Elektrolyten bzw. Separators durch die große Dicke zu hoch werden. Dementsprechend ist ein solcher keramische Separator mit Elektrolytfunktion sehr aufwendig und kostenintensiv.

Die kommerzielle Herstellung dieser Glaskeramiken erfolgt bisher über den Weg der Glasschmelze, Gießen eines massiven Formkörpers, Kristallisation mittels gezielter Wärmebehandlung und finaler mechanischer Nachbearbeitung. Alternativ hierzu wird in US 2010/0113243 A1 auch der Einsatz von Pulverstrecken für das Prozessieren keramischer bzw. glaskeramischer Pulver beschrieben.

Als Verfahren zur Formgebung für planare Substrate aus Pulvern in Verbindung mit organischen und wässrigen Hilfsstoffen werden das Kaltpressen, Heißpressen, Foliengießen, Inkjet, Aerosoldruck sowie Siebdruck in Verbindung mit geeigneten Wärmebehandlungen für Sinterung der Grünkörper benannt. Ziel aller genannten Verfahren ist die Herstellung monolithischer, gasdichter und planarer Substrate mit Dicken, die einerseits eine hohe Ionen-Leitfähigkeit und andererseits eine ausreichende mechanische Stabilität gewährleisten.

In US 2009/0317724 A1, US 2009/0317724 A1 oder US 2007/0231704 A1 wird die Herstellung monolithischer keramischer Elektrolyte sowie im weiteren daraus realisierte Batterieaufbauten beschrieben, die direkt über eine Glasschmelze in eine planare Form gebracht und durch eine geeignete Wärmebehandlung in eine Glaskeramik überführt wurden. Die Schritte der Mahlung und Sinterung entfallen hier.

Als Materialien werden Li-Tiₓ-Al_{y}-Phosphate mit variablen x- und y-Stöchiometrien sowie Substitutionsmustern der Kationen Ti und Al durch alternative geeignete 4-wertige Elemente (Si, Ge) verwendet. Insbesondere die Verwendung von GeO₂ als Komponente in diesen Verbindungen führt offensichtlich zu sehr hohen spezifischen Ionen-Leitfähigkeiten der synthetisierten Verbindungen.

Der Herstellungsprozess über die Schmelzformgebung ist zum einen als aufwendig und kostenintensiv (mechanische Nachbearbeitung) zu betrachten und zum anderen als begrenzt hinsichtlich der Flexibilität der realisierbaren Geometrien.

In Summe weisen die benannten Lithium-Ionen leitfähigen Verbindungen in der Ausführung als monolithisches Substrat Nachteile auf. Zum einen müssen die Substrate in erheblichen Dicken ausgeführt werden, um eine ausreichende Stabilität und Gasdichtheit aufzuweisen. Dieser Umstand geht eindeutig auf Kosten des flächennormierten Widerstandes der Substrate, der sich umgekehrt proportional zur Dicke verhält. Das bedeutet, dass man Lithium-Ionen leitende Verbindungen mit möglichst hohen spezifischen Leitfähigkeiten und geringen Dicken benötigt. Hierzu ist bekannt, dass insbesondere hoch GeO₂-haltige Verbindungen die geforderten Ionen-Leitfähigkeiten aufweisen. Germanium gilt als ein teurer und nur in geringen Mengen verfügbarer Rohstoff. Zudem ist die Verfügbarkeit begrenzt.

So sind aus US 2011/0262836 und US 2009/0317724 Aufbauten für Kathoden, die auch bei Lithium-Luft- Akkumulatoren eingesetzt werden können. Dabei soll zumindest auch ein poröser Bereich vorhanden sein. Der poröse Bereich soll aber nicht vollständig aus einem keramischen Werkstoff gebildet sein. Vielmehr sollen in diesem Bereich mindestens 5 Masse-% Kohlenstoff neben LAGP oder LATP als ionenleitende glaskeramische Komponente enthalten sein.

JP 63-166160 betrifft einen Festelektrolyten für Brennstoffzellen.

Von B. Kumar, u.a. ist in "Space Charge Signature and Ist Effects on Ionic Transport in Heteregeneous Solids"; J. Am. Ceramic Soc. 90; 2007; S.3323-3325 ein geeigneter Elektrolytwerkstoff beschrieben.

In JP 2-225310 sind mögliche Zusammensetzungen für einen Festelektrolyten genannt.

Es ist daher Aufgabe der Erfindung, Festelektrolyt für den Einsatz in Lithium-Luft- oder Lithium-Wasser-Akkumulatoren zur Verfügung zu stellen, der eine ausreichende Festigkeit, für Lithiumionen gute Leitfähigkeit, eine Gasdichtheit und Wasserresistenz aufweist und dabei kostengünstig herstellbar ist.

Erfindungsgemäß wird diese Aufgabe mit einem Festelektrolyt gelöst, der die Merkmale des Anspruchs 1 aufweist. Vorteilhafte Ausgestaltungen und Weiterbildungen der Erfindung können mit in untergeordneten Ansprüchen bezeichneten Merkmalen erreicht werden.

Im Rahmen eines planaren Akkumulatoraufbaus, und hier insbesondere beim Packaging planarer Aufbauten, für Lithium-Luft- und Lithium-Wasser-Akkumulatoren werden diese Nachteile vermieden, wenn das kombinierte Separator-Elektrolyt-Substrat als offene poröse keramische Trägerstruktur ausgeführt ist, die zumindest auf der Seite der Kathode mit einer oder mehreren gasdichten und Lithiumionen leitfähigen Schicht(en) bedeckt ist. Die mechanische Stabilität des Aufbaus wird von dem porösen Trägersubstrat gewährleistet, während der/den deutlich dünneren aber dichten und für Lithiumionen leitfähigen Schicht(en) die Funktionen des Elektrolyten sowie der gasdichten Separierung des Anoden- und des Kathodenraumes erfüllt/erfüllen.

Durch die Trennung dieser Funktionen bietet sich die Möglichkeit, auch kostenintensive Rohstoffe in geringen Mengen für die ionenleitfähigen Schicht(en) einzusetzen, da im Vergleich zu einer monolithischen Ausführung gemäß dem Stand der Technik deutlich geringere Mengen benötigt werden. Als poröse Trägersubstrate können zum einen kommerziell verfügbare Keramiken mit geeigneten Eigenschaften hinsichtlich der thermomechanischen, thermochemischen, und prozessrelevanten Eigenschaften der für die leitfähigen Schichten verwendeten Materialien zum Einsatz kommen. Eine Anpassung kann auch unter Berücksichtigung des thermischen Ausdehnungskoeffizienten und der Haftung der Schicht auf einem porösen Substrat erfolgen. Andererseits ist es auch denkbar, für das poröse Trägersubstrat kostengünstige glaskeramische Verbindungen oder Glas/Keramik-Komposite zu verwenden, die ebenfalls über eine Leitfähigkeit für Lithium-Ionen verfügen. Hierdurch könnte zum einen die Gesamtleitfähigkeit des Mehrschichtaufbaus positiv beeinflusst werden und zum anderen könnte das poröse Trägersubstrat in seinen Eigenschaften deutliche besser an die dünnen, ionenleitfähigen Schicht(en) angepasst werden.

Für poröse Trägersubstrate als Träger für die dichte(n) für ionenleitfähige(n) Schicht(en) kann eine monolithische poröse Keramik mit offener Porosität: bevorzugt aus Al₂O₃, ZrO₂, MgAl₂O₄, SiC, Si₃N₄ sowie generell Keramiken, wie auch Keramik-Keramik-Komposite; glasgebundene Keramiktypen eingesetzt werden. Die Keramik sollte eine offene Porosität > 15 Vol-% bis maximal 80 Vol.-% aufweisen, wobei ein Wert im Bereich 45 Vol.-% bis 60 Vol.-% zu bevorzugen ist. Die Porengröße sollte im Bereich 1 µm - 10 µm, mit bevorzugt im Bereich 1 µm - 5 µm liegen. Das Trägersubstrat sollte eine Dicke im Bereich 20 µm -500 µm, bevorzugt im Bereich von 20 µm - 250 µm, besonders bevorzugt im Bereich 20 µm - 100 µm aufweisen. Es können auch mehrschichtige poröse keramische Substrate mit abgestufter Porosität für das Trägersubstrat eingesetzt werden. Eine auf der Oberfläche eines Trägersubstrats ausgebildete Schicht sollte eine Dicke zwischen 10 µm - 50 µm aufweisen. Die Auswahl des keramischen Werkstoffs für das Trägersubstrat kann unter Berücksichtigung des thermischen Ausdehnungskoeffizienten des Materials der auf dem Trägersubstrat ausgebildeten Schicht(en) erfolgen, um eine gute und sichere Haftung zu gewährleisten.

Für das Trägersubstrat sollten folgende Rahmenbedingungen gelten:
▪ Offene Porosität > 15 Vol-% bis max 80 Vol.-% wobei ein Wert von max. 60 zu bevorzugen ist
▪ Porengröße 1 µm - 10µm mit bevorzugtem Bereich 10 µm - 20 µm
▪ Substratstärke 100 µm - 500µm

Die Porenstruktur des unteren Substrates mit der gröberen Porosität sollte im Vergleich zur fein poröseren Top-Schicht so grob sein, dass keine negative Beeinflussung bezüglich der Durchströmungseigenschaften eintritt. Für den Fall mehrschichtiger Substrate mit abgestuften Porositäten sollte das untere Substrat, das sich in unmittelbarem Kontakt mit dem Elektrolyten befindet, die größte Porosität aufweisen. Auf diese Schicht aufgebrachte und dünnere Substratschichten besitzen feinere Porositäten. Damit kann sichergestellt werden, dass die finale dichte und Li-Ionen leitende Schicht besser ausgebildet werden kann.

Eine dichte als Elektrolyt fungierende Schicht mit hoher Lithiumionen-Leitfähigkeit, die auf dem porösen Trägersubstrat ausgebildet ist, kann entweder aus einem einer Glaskeramik zugrundeliegenden amorphen Glas oder aus bereits kristallisierten glaskeramischen Partikeln bestehen. Der Einsatz solcher chemischen Verbindungen als Sinterhilfsmittel für die Versinterung solcher glaskeramischen Pulver kann als Stand der Technik voraus gesetzt werden. Hierbei werden die glaskeramischen Partikel mit einer zusätzlichen Additivphase im Sinterprozess gebunden. Solche Additive können beispielsweise Lithiumsalze, wie z.B. Li₃PO₄, LinO₃ oder LiCO₃ sein. Es können aber auch weitere anorganisch-nichtmetallische Verbindungen unterstützend eingesetzt werden. Als solche Additive können Aluminate, Titanate, Phosphate sowie weitere chemische Verbindungen fungieren, die eine Sinterung unterstützende Eigenschaften aufweisen.

Die Ausgangspartikelgröße des aufzutragenden Pulvers sollte zwischen 0,1 µm und maximal 20 µm, bevorzugt zwischen 1 µm bis 5 µm liegen.

Im gesinterten Zustand sollte die Elektrolytschicht keine offene Porosität aufweisen, die einen Zutritt von Sauerstoff oder Wasser in den geschützten Bereich des Akkumulators und insbesondere der Kathode ermöglichen würde.

Die geschlossene Porosität sollte weniger als 20 % betragen wobei Werte kleiner als 5 Prozent bevorzugt sind. Die Schicht kann entweder im Co-Firing zusammen mit der Keramik des Trägersubstrates gebrannt werden, oder im Post firing auf ein bereits gesintertes Trägersubstrat aufgebracht und gesintert werden.
Die Schichtdicke der dichten Elektrolytschicht auf dem Trägersubstrat sollte zwischen 1 µm - 50 µm betragen. Die spezifische Leitfähigkeit des Materials soll mindestens 10⁻⁵ S cm⁻¹ betragen und zwischen diesem Wert bis 10⁻² S cm⁻¹ liegen.

Bei der Herstellung kann so vorgegangen werden, dass das Dichtsintern der Schicht direkt auf dem Trägersubstrat bzw. der Schicht des Trägersubstrates mit dem geringsten mittleren Porendurchmesser durchgeführt wird.

Neben dem Aufbringen einer geschlossenen Schicht als Deckschicht auf ein poröses Trägersubstrat kann auch eine andere Variante berücksichtigt werden. Das poröse Trägersubstrat kann dabei mit einer Suspension (Schlicker) der Lithium-Ionen leitfähigen Glaskeramik zumindest partiell infiltriert werden. In einer weiteren Wärmebehandlung versintern die Partikel der Glaskeramik mit der Keramik des porösen Trägersubstrates und bilden eine dichte Kompositschicht, die für die Ionen leitfähig aber für Gas und Wasser dicht ist.

Für die Herstellung einer dichten Li⁺-leitfähigen Schicht auf einem porösen keramischen Substrat können verschiedenste Abscheide- bzw. Beschichtungsverfahren zum Einsatz kommen, mit denen keramische Pulver verarbeitet werden, dies sind z.B. Siebdruck, Lamination von Tapes, Inkjet, Aerosol oder Spritzverfahren (thermisch, Plasma). Für den Aufbau so einer dichten und für Ionen leitfähigen Schicht ist eine Sinterfähigkeit des für diese Schicht(en) eingesetzten Materials erforderlich, um die aufgebrachten Pulverschichten in einer anschließenden Wärmebehandlung verdichten zu können. Die Sinterfähigkeit kann entweder eine intrinsische Eigenschaft der jeweiligen Glaskeramik sein oder aber durch zusätzliche Additive (vgl. oben) bewirkt werden. Hierbei ist ebenfalls akzeptabel, dass ein Teil der leitfähigen Pulver in die poröse Trägerschicht infiltriert und dort dicht sintert.

Als geeignete Zusammensetzungsbereiche für die Herstellung der ionenleitenden, dichten Schichten, ohne Germanium, wurden Verbindungen basierend auf der Summenformel Li₁₊ₓAlₓTi₂₋ₓ(PO₄)₃ in Verbindung mit verschiedenen Substitutionsmöglichkeiten an 3-wertigen (B=Cr; Ga; Sc, In; Y) und 4-wertigen (C=Si, Hf, Zr, Ge) Elementen als geeignet ermittelt. Dabei soll 0,05 ≤ x ≤ 1,9, bevorzugt 0,25 ≤ x ≤ 0,6 eingehalten werden.

Die substituierten Elemente beeinflussen den Anteil an mobilen Lithiumionen in den Kristallphasen und somit direkt die ionische Leitfähigkeit. Dem Substitutionsmuster liegt damit folgende Summenformel zugrunde: Li₁₊ₓAl_{x-b}B_{b}Ti_{2-x-c}C_{c}(PO₄)₃.
Dabei soll 0,05 ≤ x ≤ 1,9, bevorzugt 0,25 ≤ x ≤ 0,6, 0,05 ≤ b ≤ 1,5, bevorzugt 0,01 ≤ b ≤ 0,5 und 0,05 ≤ c ≤ 1,5, bevorzugt 0,01 ≤ c ≤ 0,5 gelten.

Ergänzend zu den zuvor bereits genannten chemischen Verbindungen, die als Sinteradditive zugesetzt werden können, können analoge chemische Verbindungen der jeweiligen substituierten chemischen Elemente vom Typ B und C, bezogen auf die o.g. Summenformel, eingesetzt werden.

Denkbar sind auch komplexere bzw. multiple Substitutionen 3- und 4-wertiger chemischer Elemente. In diesem Zusammenhang kann auch die Verwendung Li⁺-leitfähiger Füllstoffe (anorganisch-nichtmetallische Phasen) berücksichtigt werden, die in den ionenleitfähigen Schichten versintert werden und einen entsprechenden Beitrag zur Gesamtleitfähigkeit erbringen können.

Es besteht auch die Möglichkeit unterschiedliche Pulver mit unterschiedlichen Zusammensetzungen und damit auch Eigenschaften (z.B. Sinterfähigkeit, Leitfähigkeit, chemische Stabilität) miteinander als Pulvermischung zu kombinieren und zu einer Schicht zu versintern. Dadurch können die finalen Eigenschaften solcher gesinterten Schichten gezielt beeinflusst und an bestimmte Anforderungen angepasst werden.

Für den Aufbau der Anodenseite kann der Li⁺-leitende Kontakt zwischen dem Lithium-Metall und der dünnen als Festelektrolyt fungierenden Schicht über einen flüssigen Elektrolyten realisiert werden. Hierfür kann die poröse Trägerkeramik mit diesem Elektrolyten gefüllt werden. So kann zum Beispiel für einen Lithium-Seewasser-Akkumulator die Funktion des flüssigen Elektrolyten durch eine Anodenschutzschicht erfüllt sein. Dabei kann eine solche Kontaktschicht als eine 1 molare LiPF₆-Lösung eingesetzt werden, die zur Stabilisierung in eine poröse EC-DEC-Membran (Volumenverhältnis von 1:1) infiltriert ist. Die flüssige Elektrolytphase steht damit in leitfähigem Kontakt mit der Glaskeramik und dem Lithium-Metall.

Mit der Erfindung kann besonders vorteilhaft eine Entkopplung der einerseits notwendigen mechanischen Stabilität des planaren Aufbaus von anderen wünschenswerten Eigenschaften, wie geringer Widerstand für die Ionenleitung, Gasdichtheit sowie hohe Beständigkeit gegenüber Feuchte bzw. wässrigen Medien, erreicht werden. Für die Optimierung der dünnen Schicht(en) auf dem porösen Trägersubstrat können damit beispielsweise auch kostenintensivere Rohstoffe verwendet werden, da bezogen auf den Gesamtaufbau im Vergleich zu einer monolithischen Ausführung vergleichsweise geringe Mengen benötigt werden.

Es ist auch eine Ausführung der Festelektrolytfunktionsschicht als Mehrschichtaufbau denkbar, um beispielsweise im direkten Kontakt mit der Kathode eine mäßig leitfähige aber korrosionsstabile Deckschicht auf einer für Ionen gut leitfähigen aber weniger stabilen weiteren Schicht zu applizieren.

Die poröse Ausführung des Trägersubstrats bietet die Möglichkeit, das Trägersubstrat auf der Anodenseite mit einem flüssigen Elektrolyten zu tränken und so eine für Ionen hoch leitfähige Verbindung zwischen den dünnen, leitfähigen, keramischen Festelektrolytfunktionsschichten und der aus metallischem Lithium bestehenden Anode zu realisieren. So kann im Vergleich zu einem monolithischen Aufbau des Festelektrolyten, nach dem Stand der Technik, die Notwendigkeit umgangen werden, den Festelektrolyten in seiner gesamten Dicke aus einem sehr hoch leitfähigen, aber unter Umständen sehr kostenintensiven, Material zu fertigen.

Bei der Erfindung besteht die Möglichkeit die poröse Trägerschicht und die ionenleitende Schicht im Cofiring oder auch in einem mehrstufigen Prozess zu sintern. Es können sowohl planare ebene Gebilde, wie auch nichtplanare Formen, wie z.B. rollen-, röhren-, halbzylinderförmige Gebilde hergestellt und eingesetzt werden.

Nachfolgend soll die Erfindung beispielhaft näher erläutert werden.
Dabei zeigen:
- Figur 1: in Diagrammform Dichten von Sinterkörpern der Verbindungen Li02 und Li04 in Abhängigkeit der maximalen Sintertemperatur;
- Figur 2: einen Vergleich der mittels Erhitzungsmikroskopie gemessenen temperaturabhängigen Sinterschwindungen der Verbindungen Li02 und Li04;
- Figur 3: Spezifische elektrische Leitfähigkeiten bei Raumtemperatur, der in Tabelle 1 aufgelisteten Verbindungen in Abhängigkeit der Sintertemperatur von Pulverpresskörpern und
- Figur 4: Temperaturabhängige spezifische Leitfähigkeiten und Aktivierungsenergien ausgewählter Verbindungen aus Tabelle 1 nach Sinterung bei 1000°C an Luft.

Die nachfolgend genannten Proben werden mit Li0 und einer zusätzlichen Ziffer bezeichnet.

Im Rahmen des nachfolgend beschriebenen Ausführungsbeispiels wird zum einen die Herstellung von Gläsern, deren Verarbeitung zu Pulvern und gesinterten Pulverpresskörpern sowie die Messung der Ionenleitfähigkeit mittels Impedanzspektroskopie beschrieben.

Weiterhin sind die Verarbeitung zweier ausgewählter Pulver zu siebdruckfähigen Pasten, die Beschichtung poröser keramischer Substrate sowie der Einbrand der Schichten und die entsprechenden elektrischen Leitfähigkeitsmessungen dargestellt. Hierbei wurde Wert darauf gelegt, dass ein Pulver eine gute Sinterfähigkeit und ein Pulver eine schlechtere bzw. unzureichende Sinterfähigkeit aufweisen.

Tabelle 1 stellt eine Auswahl an Materialzusammensetzungen dar, die entsprechend nachfolgend beschriebener Vorschrift zu Gläsern erschmolzen, weiterverarbeitet und charakterisiert wurden. Mit Ausnahme von Li06 handelt es sich es sich um Zusammensetzungen des Systems Li₂O-Al₂O₃-P₂O₅-P₂O₅. Li06 enthält zusätzlich SiO₂.

**Tabelle 1 gibt Zusammensetzungen von Li₂O-Al₂O₃-TiO₂-(SiO₂)-P₂O₅-Gläsern an**

| Glasbez. | Li02 | Li03 | Li04 | Li06 | Li09 |
|---|---|---|---|---|---|
| Oxid | Anteile der Oxide in mol-% | | | | |
| Li₂O | 14 | 16,25 | 20 | 18,6 | 16,25 |
| Al₂O₃ | 9 | 3,75 | 7,5 | 3,5 | 3,75 |
| TiO₂ | 38 | 42,5 | 35 | 39,5 | 42,5 |
| P₂O₅ | 39 | 37,5 | 37,5 | 31,4 | 37,5 |
| SiO₂ | | | | 7 | |
| Summe | 100 | 100 | 100 | 100 | 100 |

Bei der Glasherstellung wurden die nachfolgend aufgelisteten Chemikalien in der Qualität "pro analysi" verwendet:
▪ Li₂CO₃ (Baker, Mallinckrodt)
▪ Al (OH)₃ (VWR)
▪ TiO₂ (Sigma Aldrich)
▪ (NH₄)₂HPO₄ (Sigma Aldrich)
▪ AlPO₄ (Alpha Aesar)

Die Mischung der Rohstoffe erfolgte in einem verschraubbaren Kunststoffbehälter mittels eines Turbularmischers für ca. 30 Minuten. Die auf diese Weise hergestellten Rohstoffversätze wurden in einen Al₂O₃-Tiegel eingefüllt und zunächst bei Temperaturen zwischen 400°C und 600°C für mindestens 5 h an Luft vorkalziniert und anschließend bei Temperaturen zwischen 1300°C und 1400°C mit Haltezeiten von 2 h bei einer maximalen Temperatur von 1400 °C an Luft zu Gläsern erschmolzen. Das Abgiessen der Glasschmelzen erfolgte entweder in deionisiertes Wasser (RT) oder auf eine trockene Stahlplatte (RT). Bei einem Abguss der Schmelze in Wasser kann die erhaltene Glasfritte in einem Trockenschrank bei 150°C für 12h an Luft getrocknet werden.

Für die weitere Verarbeitung der Gläser wurden die Glasfritten zunächst in einer Scheibenschwingmühle auf eine Siebfraktion < 500 µm vorzerkleinert. Die finale Mahlung der vorzerkleinerten Fritten wird an Luft in einer Planetenkugelmühle bis auf typische Partikeldurchmesser von d₁₀ < 1µm, d₅₀= 5 µm - 10µm und d₉₀ < 25µm entsprechend den Masseanteilen (Q₃) durchgeführt (Messung der Partikelgrößenverteilung mittels Laserbeugung).

Die weitere Verarbeitung kann durch Kaltpressen und Sintern erfolgen. Zur Herstellung massiver Probekörper wurden die Pulver uniaxial zu zylindrischen Proben mit Höhen zwischen 8 mm - 10 mm und einem Durchmesser von 6 mm verpresst. Die Presskraft betrug 2,5 kN. Bei einer anschließenden unter atmosphärischen Bedingungen stattfindenden Wärmebehandlung wurden die Probekörper an Luft gesintert.

Dabei konnte ein typiches Ofen-Profil: 25°C - 2 K/min bis zum Erreichen der maximalen Temperatur in Höhe von 1200 °C gefahren werden. Die Maximaltemperatur wurde 1 h gehalten und dann mit einer Rate von 2 K/min bis auf 25 °C abgekühlt.

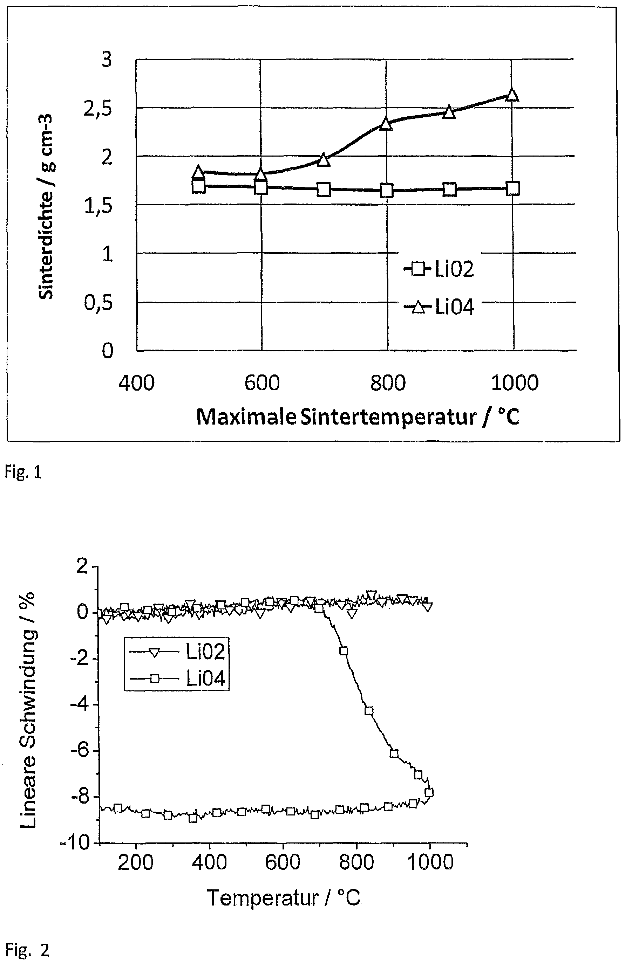

Figur 1 zeigt exemplarisch das Verhalten von Presskörpern der Glaspulver Li02 und Li04 in Abhängigkeit der maximalen Sintertemperatur. Während die Zusammensetzung Li02 unabhängig von der gewählten Sintertemperatur bis maximal 1000 °C keine nennenswerte Sinterschwindung bzw. Verdichtung zeigt, nimmt die Dichte von Li04 ab einer Sintertemperatur von 700 °C stetig bis 1000 °C zu. Damit kann die Zusammensetzung Li02 als nicht sinteraktiv und die Zusammensetzung Li04 als sinteraktiv unter atmosphärischen Bedingungen bezeichnet werden.

Dieses Verhalten bestätigt sich anhand von Schwindungskurven (Figur 2), die mittels optischer Dilatometrie in einem Erhitzungsmikroskop gemessen wurden. Während bei Li04 bis zu einer Temperatur von 1000 °C eine lineare Sinterschwindung von ca. 8,5 % auftrat, wurde im Fall der Li02 lediglich ein leichter Anstieg von 8·10 -6 ppm/K im Temperaturbereich von 100 °C bis 1000 °C gemessen.

Aus quantitativen röntgenographischen Rietveld-Analysen von Li02- und Li04-Proben nach der Sinterung ergaben sich die in Tabelle 2 dargestellten Phasenzusammensetzungen:

**Tabelle 2 Mittels Röntgenographie und Rietveldanalyse gemessene Phasenzusammensetzungen der kristallisierten Verbindungen Li02 und Li04**

| | | Sintertemperatur/°C | | |
|---|---|---|---|---|
| Kristalline Phasen | Probenbez. | 500° C | 700°C | 1000°C |
| Li₁₊ₓT₂-ₓAlₓ(PO₄) ₃ / Ma.-% | Li04 | 77,8 | 86,0 | 91,5 |
| AlPO₄ / Ma.-% | | 11,8 | < 1 | --- |
| Li₁₊ₓT₂-ₓAlₓ(PO₄) ₃ / Ma.-% | Li02 | 69,6 | 68,4 | 71,9 |
| AlPO₄ / Ma.-% | | 21,4 | 22,8 | 22,3 |

Im Fall von Li04 wird der bei noch 500 °C vorhandene Anteil an AlPO₄ mit steigender Sintertemperatur geringer und ist bei Temperaturen oberhalb von 700 °C röntgenographisch nicht mehr nachweisbar. In diesem Temperaturintervall steigt auch die Sinterdichte dieses Materials an. Im Gegensatz hierzu enthält die Zusammensetzung Li02 einen deutlich höheren Anteil an AlPO₄, der sich auch mit steigender Sintertemperatur nicht verringert. Eine nennenswerte Verdichtung dieses Materials ist nicht messbar.

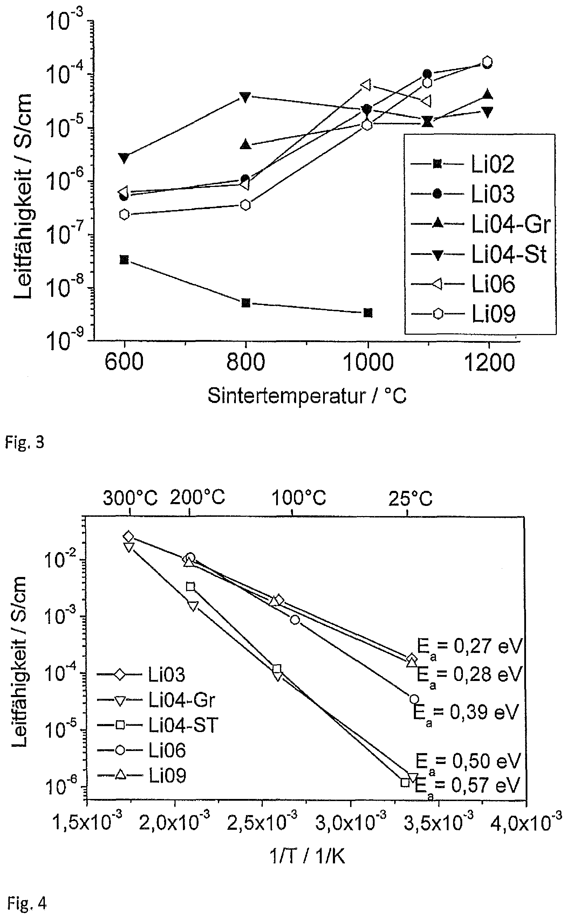

Im Anschluss an die Sinterung der Presskörper wurden jeweils die Stirnseiten mit Gold besputtert und die elektrische Leitfähigkeit impedanzspektroskopisch bei Raumtemperatur im Frequenzbereich von 1 Hz bis 1 MHz und einer Amplitude von 100 mV ermittelt. Als Widerstandswert wurde jeweils die Messung beim Maximum des Phasenwinkels verwendet. Der Kehrwert des spezifischen Widerstandswertes stellt die spezifische Leitfähigkeit der Proben dar. Figur 3 zeigt die für die verschiedenen Gläser gemessenen spezifischen elektrischen Leitfähigkeiten in Abhängigkeit von der maximalen Sintertemperatur. Im Vergleich mit Figur 1 zeigt sich, dass das weniger sinteraktive Material Li02 die geringste elektrische Leitfähigkeit aufweist. Bei den anderen Materialien (Li03, Li04, Li06 und Li09) erhöht sich die spezifische elektrische Leitfähigkeit mit steigender Sintertemperatur um mehrere Größenordnungen. Maximale elektrische Leitfähigkeiten von mehr als 10⁻⁴ Scm⁻¹ werden mit den Materialien Li09 und Li03 bei einer Sintertemperatur von mindestens 1000 °C erreicht.

Mit ausgewählten Proben, die bei einer maximalen Temperatur von 1000 °C gesintert wurden, sind weiterhin die spezifischen elektrischen Leitfähigkeiten impedanzspektroskopisch in einem Temperaturbereich zwischen Raumtemperatur und 500 °C gemessen worden. Figur 3 zeigt die Auftragung der temperaturabhängigen spezifischen Leitfähigkeiten entsprechend der Arrhenius-Gesetzmäßigkeit. Aus dieser Auftragung lassen sich die Aktivierungsenergien für die elektrischen Leitfähigkeiten der Materialien ableiten. Die gemessenen Aktivierungsenergien liegen zwischen 0,27 eV und 0,57 eV und deuten auf einen über Ionenleitung ablaufenden Mechanismus hin.

Für eine Pastenherstellung für den Auftrag als Schicht auf mikroporöses Substrat wurden Pulver der Materialien Li02 und Li04 nach Präparation entsprechend obiger Ausführungen unter Verwendung von in der Dickschichttechnologie üblichen organischen Bindern sowie einer Lösemittelart eingesetzt. Der Feststoffgehalt der Pasten lag im Bereich zwischen 75 Masse-% und 85 Masse-%. Die Pasten wurden vollflächig auf 2x2 cm² große und 500 µm dicke, foliengegossene, Al₂O₃-Substrate mit Porositäten zwischen 30 Vol.-% und 38 Vol.-% und mittleren Porendurchmessern zwischen 4 µm und 8 µm appliziert. Die Applikation der Pasten erfolgte mittels 2-fachem Siebdruck, wobei zwischen beiden Siebdruckschritten eine Trocknung der ersten Schicht (30 Minuten, 120 °C, Luft) erfolgte. Auf diese Weise wurden Schichtdicken zwischen 30 µm und 40 µm im nicht gesinterten Zustand auf den porösen Al₂O₃-Substraten aufgebracht.
Im Anschluss an den Trocknungsprozess wurden die bedruckten Substrate einem Einbrennprozess mit Entbinderungsschritt unterzogen. Hierbei wurden Heizraten und Kühlraten zwischen 5 und 10 K/min und Maximaltemperaturen zwischen 1000 °C und 1100 °C (Haltezeit bei maximaler Temperatur 1 h bis 3 h) verwendet. Die Entbinderung wurde in diesen Einbrennprozess integriert und erfolgte für 2 h bei 500 °C an Luft. Die kristalline Phasenzusammensetzung der eingebrannten Dickschichten auf den porösen Trägersubstraten wurde qualitativ mittels Röntgenographie überprüft und als identisch mit den für die Verbindungen Li02 und Li04 vorgefundenen Phasen bewertet (vgl. hierzu Tabelle 2). Die Dichtheit der eingebrannten Substrate wurde über die massenspektroskopische Messung der Helium-Leckrate (Gerät Helium-Lecksucher Fa. Oerlikon) überprüft. Für die mit Li02 beschichteten Substrate wurden Leckraten von mehr als 10⁻³ l mbars⁻¹ gemessen was auf nicht dichte Schichten schließen lässt. Für die mit Li04 beschichteten Substrate wurden Leckraten von weniger als 10⁻⁸ l mbars⁻¹ gemessen was auf dichte Schichten schließen lässt. Die gemessenen Leckraten beziehen sich auf eine kreisrunde Messfläche mit einem Umfang von 1,55 cm. Diese Ergebnisse stehen im Einklang mit dem Sinterverhalten der Verbindungen Li02 und Li04 als massive Pulverpresskörper.

Die Bestimmung der elektrischen Leitfähigkeit dieser beschichteten Proben erfolgte über elektrochemische Impedanzspektroskopie. Hierfür wurden aus den gesinterten und beschichteten 2x2 cm² großen Substraten kreisrunde Proben mit einem Durchmesser von 1,27 mm heraus präpariert. Diese Proben wurden für diese Messung in einer 2-Elektrodenschraubzelle (Swagelok®-Zelle) verbaut. Als Elektroden dienten zwei runde Edelstahlplättchen, die sich unter den gegeben elektrochemischen Bedingungen inert verhalten ("blocking electrodes"). Zwischen diese Elektroden wurden die runden Probenstücke gelegt und mit einigen Tropfen Elektrolyt (LP40, kommerziell erhältlicher Batterieelektrolyt 1M LiPF₆ in EC:DEC 1:1) getränkt (ca. 40 - 60 mg). Die elektrische Kontaktierung erfolgt auf einer Seite direkt durch den Stromsammler der Zelle, auf der anderen Seite über eine Feder, die einen gleichmäßigen Anpressdruck auf die Proben sicherstellt.

Die Messung erfolgte an einem Potentiostaten mit integriertem FRA (Gamry Referenz 600). Da in 2-Elektrodenanordnungen gemessen wurde, musste die Referenz- auf die Gegenelektrode gelegt werden. Die Impedanzmessung wurde beim Ruhepotential der Zelle mit einer Amplitude von 100 mV durchgeführt, der untersuchte Frequenzbereich lag zwischen 10⁵ Hz - 1Hz. Für die Berechnung der elektrischen Leitfähigkeit wurde der Ohmsche Widerstandsanteil bei hohen Frequenzen (ca. 10⁴ Hz - 10⁵ Hz) genutzt.

Tabelle 3 listet die Ergebnisse der impedanzspektroskopischen Messungen an den beschichteten Substraten auf. Die aus Li02 gebildeten porösen Schichten zeigen deutlich höhere elektrische Leitfähigkeiten als die dichten auf Li04 basierenden Schichten. Dies erklärt sich aus der Tatsache, dass der flüssige Elektrolyt die poröse Li04-Schicht durchtränkt hat und dadurch zum überwiegenden Teil die Leitfähigkeit des Elektrolyten gemessen wird. Im Gegensatz dazu werden im Fall der mit Li04 beschichteten Substrate spezifische elektrische Leitfähigkeiten gemessen, die nur geringfügig unterhalb der in Figur 3 gezeigten elektrischen Leitfähigkeiten für die massiven Li04-Sinterkörper liegen.

**Tabelle 3 gibt impedanzspektroskopisch gemessene spezifische Leitfähigkeiten der mit Li02 und Li04 beschichteten porösen Al₂O₃-Substrate an**

| | | Spezifische Leitfähigkeit bei der jeweiligen Sintertemperatur / mS cm⁻¹ | | |
|---|---|---|---|---|
| | Lithium-Ionen leitende Schicht | 800°C | 1000°C | 1200°C |
| | Li04 (Dicke ca. 30µm) | 1·10⁻³ | 4·10⁻³ | 2·10⁻² |
| | Li02 (Dicke ca. 40 µm) | 8·10⁻² | 7·10⁻² | --- |

## Patentansprüche

1. Lithium-Luft- oder Lithium-Wasser-Akkumulator mit einem Festkörperelektroyt, umfassend ein offenporöses keramisches Trägersubstrat, das zumindest auf der der Kathode zugewandten Oberfläche mindestens eine für Lithium-Ionen leitfähige Schicht, mit einer Lithium-Ionen-Leitfähigkeit von mindestens 10⁻⁵ Scm⁻¹, die gasdicht ist, ausgebildet ist und das Trägersubstrat eine größere mechanische Festigkeit und Schichtdicke als die mindestens eine Schicht aufweist.

2. Lithium-Luft- oder Lithium-Wasser-Akkumulator mit einem Festkörperelektroyt nach Anspruch 1, **dadurch gekennzeichnet, dass** das Trägersubstrat eine Porosität von mindestens 15 % und maximal 60 % und/oder die Poren eine Porengröße im Bereich 1 µm - 10 µm und/oder eine Dicke im Bereich 20 µm - 500 µm aufweisen, wobei die mindestens eine Schicht eine Dicke zwischen 10 µm - 50 µm aufweist.

3. Lithium-Luft- oder Lithium-Wasser-Akkumulator mit einem Festkörperelektroyt nach Anspruch 1 oder 2, **dadurch gekennzeichnet, dass** das Trägersubstrat aus einem keramischen Werkstoff besteht, der ausgewählt ist aus Al₂O₃, ZrO₂, MgAl₂O₄, SiC und Si₃N₄.

4. Lithium-Luft- oder Lithium-Wasser-Akkumulator mit einem Festkörperelektroyt nach einem der vorhergehenden Ansprüche, **dadurch gekennzeichnet, dass** die Dicke des Trägersubstrats mindestens doppelt so groß, wie die Dicke der mindestens einen Schicht ist.

5. Lithium-Luft- oder Lithium-Wasser-Akkumulator mit einem Festkörperelektroyt nach einem der vorhergehenden Ansprüche, **dadurch gekennzeichnet, dass** das Trägersubstrat aus mindestens zwei Schichten mit jeweils unterschiedlicher Porosität oder ausgehend von der anodenseitigen Oberfläche eine gradierte Porosität aufweist, die sich in Richtung der ionenleitenden Schicht verkleinert.

6. Lithium-Luft- oder Lithium-Wasser-Akkumulator mit einem Festkörperelektroyt nach einem der vorhergehenden Ansprüche, **dadurch gekennzeichnet, dass** die Poren des Trägersubstrats mit einem flüssigen für Lithiumionen leitenden Elektrolyten infiltriert sind.

7. Lithium-Luft- oder Lithium-Wasser-Akkumulator mit einem Festkörperelektroyt nach einem der vorhergehenden Ansprüche, **dadurch gekennzeichnet, dass** die mindestens eine Oberfläche des Trägersubstrats vollflächig mit der mindestens einen gasdichten Schicht beschichtet ist.

8. Lithium-Luft- oder Lithium-Wasser-Akkumulator mit einem Festkörperelektroyt nach einem der vorhergehenden Ansprüche, **dadurch gekennzeichnet, dass** Material der mindestens einen Schicht teilweise in das Trägersubstrat infiltriert und gasdicht ist.

## Claims

1. Lithium-air or lithium-water rechargeable battery which has a solid-state electrolyte, comprising an open-pore ceramic carrier substrate, which features at least on the cathode-facing surface at least one layer which is conductive for lithium ions, which has a lithium-ion conductivity of at least 10⁻⁵ Scm⁻¹ and which is gas-impervious, and the carrier substrate has greater mechanical strength and a larger layer thickness than the at least one layer.

2. Lithium-air or lithium-water rechargeable battery which has a solid-state electrolyte in accordance with claim 1, **characterized in that** the carrier substrate has a porosity of at least 15% and a maximum of 60%; and/or **in that** the pores have a pore size in the range of 1µm - 10 µm and/or a thickness in the range from 20 µm - 500 µm, with the at least one layer having a thickness between 10 µm and 50 µm.

3. Lithium-air or lithium-water rechargeable battery which has a solid-state electrolyte in accordance with claim 1 or claim 2, **characterized in that** the carrier substrate comprises a ceramic material which is selected from Al₂O₃, ZrO₂, MgAl₂O₄, SiC and Si₃N₄.

4. Lithium-air or lithium-water rechargeable battery which has a solid-state electrolyte in accordance with one of the preceding claims, **characterized in that** the thickness of the carrier substrate is at least twice as large as the thickness of the at least one layer.

5. Lithium-air or lithium-water rechargeable battery which as a solid-state electrolyte in accordance with one of the preceding claims, **characterized in that** the carrier substrate has at least two layers each having a different porosity or, starting from the anode-side surface, has a graduated porosity, which reduces in size in the direction of the ion-conductive layer.

6. Lithium-air or lithium-water rechargeable battery with a solid-state electrolyte in accordance with one of the preceding claims, **characterized in that** the pores of the carrier substrate are infiltrated with a liquid electrolyte conductive for lithium ions.

7. Lithium-air or lithium-water rechargeable battery with a solid-state electrolyte in accordance with one of the preceding claims, **characterized in that** the at least one surface of the carrier substrate is coated over the full surface with the at least one gas-impervious layer.

8. Lithium-air or lithium-water rechargeable battery with a solid-state electrolyte in accordance with one of the preceding claims, **characterized in that** the material of the at least one layer is partly infiltrated into the carrier substrate and is gas-impervious.

## Revendications

1. Accumulateur au lithium-air ou au lithium-eau comportant un électrolyte solide, comprenant un substrat support céramique à pores ouverts, une couche conductrice des ions lithium, présentant une conductivité des ions lithium d'au moins 10⁻⁵ S.cm⁻¹, et qui est étanche aux gaz, étant formée sur au moins la surface dirigée vers la cathode, et le substrat support présentant une résistance mécanique et une épaisseur de couche plus grandes que l'au moins une couche.

2. Accumulateur au lithium-air ou au lithium-eau comportant un électrolyte solide selon la revendication 1, **caractérisé en ce que** le substrat support présente une porosité d'au moins 15 % et au maximum de 60 %, et/ou les pores présentent une grosseur de pore comprise dans la plage de 1 µm à 10 µm, et/ou une épaisseur comprise dans la plage de 20 µm à 500 µm, l'au moins une couche présentant une épaisseur comprise entre 10 µm et 50 µm.

3. Accumulateur au lithium-air ou au lithium-eau comportant un électrolyte solide selon la revendication 1 ou 2, **caractérisé en ce que** le substrat support est constitué d'un matériau céramique qui est choisi parmi Al₂O₃, ZrO₂, MgAl₂O₄, SiC et Si₃N₄.

4. Accumulateur au lithium-air ou au lithium-eau comportant un électrolyte solide selon l'une des revendications précédentes, **caractérisé en ce que** l'épaisseur du substrat support est au moins deux fois plus grande que l'épaisseur de l'au moins une couche.

5. Accumulateur au lithium-air ou au lithium-eau comportant un électrolyte solide selon l'une des revendications précédentes, **caractérisé en ce que** le substrat support est constitué d'au moins deux couches présentant des porosités différentes l'une de l'autre, ou présente, à partir de la surface côté anode, une porosité progressive, qui diminue dans la direction de la couche conductrice d'ions.

6. Accumulateur au lithium-air ou au lithium-eau comportant un électrolyte solide selon l'une des revendications précédentes, **caractérisé en ce que** les pores du substrat support sont infiltrés par un électrolyte liquide conducteur d'ions lithium.

7. Accumulateur au lithium-air ou au lithium-eau comportant un électrolyte solide selon l'une des revendications précédentes, **caractérisé en ce que** l'au moins une surface du substrat support est revêtue en pleine surface de l'au moins une couche étanche aux gaz.

8. Accumulateur au lithium-air ou au lithium-eau comportant un électrolyte solide selon l'une des revendications précédentes, **caractérisé en ce que** le matériau de l'au moins une couche est partiellement infiltré dans le substrat support et est étanche aux gaz.
